# EUROPEAN PATENT APPLICATION

(11) **EP 4 389 652 A1**
(43) Date of publication of application: **26.06.2024**
(21) Application number: 22215183.9
(22) Date of filing: 20.12.2022
(51) Int. Cl.: B65G 21/18, B65G 23/44

(54) **BELT CONVEYOR AND METHOD OF CONTROLLING A BELT CONVEYOR**

(71) Applicant: GEA Refrigeration Canada Inc., Richmond, British Columbia V6V 1N4 (CA)
(72) Inventor: DE OLIVEIRA SANTANA, Renan, Richmond, V6Y 4M7 (CA); SOTO OROZCO, Esteban, Richmond, V7E 4S9 (CA)
(74) Representative: AWA Denmark A/S

(57) **Abstract**

A belt conveyor (1) and a method of controlling a belt conveyor are provided. The belt conveyor comprises a self-stacking and at least partly curved belt (2), at least one electric motor (3), configured to tension the self-stacking belt The belt conveyor further comprises a motor control device, configured to control the at least one electric motor, at least one sensor arrangement (10), configured to communicate with the motor control device, and the sensor arrangement is configured to sense a deviation of a conveying path of the self-stacking belt from a predefined reference conveying path of the self-stacking belt.

## Description

### Technical Field

The present invention relates to belt conveyors. The invention furthermore relates to a method of controlling belt conveyors.

### Background Art

Belt conveyors are mechanical devices that are used to transport materials or goods from one point to another. Typically, they are made up of a frame that is equipped with pulleys at their ends, and a continuous loop of material that rotates around the pulleys. This loop is known as a conveyor belt. It is typically made of a durable and resistant material. Belt conveyors are commonly used in many different industries, including, mining, agriculture, packaging, manufacturing and processing. They are an efficient and consteffective way of transporting goods or materials over short and long distances and can be used to move materials of all sorts of shapes and sizes.

The usage is commonly such that the belt conveyor transports the goods through a processing station such as an oven, a cooler, a freezer, a packaging station or other stations and from and to such stations.

It is known to use self-stacking belts in such belt conveyors. The self-stacking belts are advantageous as they are easier to clean and sanitize in comparison to non-self-stacking belts, as there are less support structures that are difficult to clean. Generally, belts in belt conveyors are exposed to wear.

It is a general desire to increase the reliability and decrease wear of belt conveyors.

### Summary of the Invention

An object of the present invention is to provide a belt conveyor with increased reliability and/or decreased wear. Another object of the present invention is to provide an improved method for controlling belt conveyors, increasing reliability and/or decreasing wear.

In a first aspect, this and further objects are achieved by providing a belt conveyor for the transportation of goods, in particular food, the belt conveyor comprising a self-stacking and at least partly curved belt, at least one electric motor, configured to tension the self-stacking belt, characterized in that the belt conveyor further comprises a motor control device, configured to control the at least one electric motor, at least one sensor arrangement, configured to communicate with the motor control device, and the sensor arrangement is configured to sense a deviation of a conveying path of the self-stacking belt from a predefined reference conveying path of the self-stacking belt.

The apparatus and the method of the invention provide increased reliability and/or decreases wear. The belt of the belt conveyor is typically consisting of multiple distinct members or stretchable material. These distinct members are exposed to wear as they move in relation to each other or to guide mechanisms. The wear is increasing with friction. The friction is dependent on the force acting onto the contact surfaces between the distinct members of the belt. In order to decrease the wear of the belt members, the forces applied to the contact surfaces between the distinct belt members, or belt tension, should not be unnecessarily high. At the same time the belt tension should not be too low, as then the transportation of goods in a controlled manner becomes more unlikely. The right belt tension for a low-wear and efficient operation of the conveyor belt is therefore required. As the right belt tension depends on operation conditions such as: temperature and humidity of the operating environment, load and speed of the belt conveyor, there is a constant need to adjust the belt tension of the belt conveyor when operation conditions change. This means that, with every change in an operation condition, the belt tension possibly needs to be manually adjusted. Adjusting the belt tension automatically takes less time than manual adjustment and is more reliable. The operating temperature of the belt may vary from -50 to +80 degrees Celsius. The conveying path of the belt conveyor is in the present invention advantageously indirectly controlled via the force that the electric motor applies to the self-stacking belt. The sensed conveying path of the belt conveyor is used as a feedback variable in the motor control device.

The self-stacking belt is capable of creating a long conveying path, allowing to process or treat a large amount of goods in limited space and in a continues manner.

In some embodiments a set point of the motor control device is changed in response to a signal of the sensor arrangement.

In this way, the set point of the motor control device may indirectly affect the belt tension of the self-stacking belt.

In some embodiments the at least one sensor arrangement is located in a section of the belt conveyor, wherein a part of the self-stacking belt is transitioning from a curvature with a first radius to a curvature with a second radius.

The first radius may for instance be at least ten times smaller than the second radius. The curvatures of the belt are typically seen as relating to vertical axes. The advantage of placing the sensor arrangement in that area is that the belt tension relates to the deviation of the conveying path of the belt from the predefined reference conveying path. This is believed to improve the accuracy of the adjustment of the belt tension even further, since any deviation is more apparent in such transitioning sections.

Thereby the sensor arrangement is located where the belt displacement is sufficiently large in response to a change in the belt tension, to control the belt tension. In an embodiment, an over tensioning of the belt leads to the belt running on an inset conveyor path, an under tensioning of the belt leads to the belt running on an outset conveyor path.

In some embodiments the sensor arrangement is configured to generate a first output signal when the distance of the self-stacking belt to a sensor of the sensor arrangement is smaller than a threshold value and a second output signal elsewise. The provision of such a threshold value entails a precise and reliable control.

The threshold value may be around 10 mm. The threshold value is chosen such that the conveyor belt is operating in or close to the reference conveying path. The first signal is different from the second signal. The signals may be sent via a wired or a wireless communication link. The used communication link standard may be: USB, LAN, Serial port, WLAN, Bluetooth etc.

The structure of the signal triggering mechanism allows to use simple sensors, which may be more reliable or cheaper. Furthermore, the implementation of the control may be easier.

In some embodiments the sensor arrangement comprises at least two sensors.

This configuration of the sensor arrangement allows to observe the displacement of the belt in two directions from the reference conveying path.

In an embodiment of the invention the sensor arrangement comprises only two sensors. The two sensors may each be responsible to report the deviation of the belt tension in two different directions. One sensor for reporting too high belt tension and the other sensor for reporting too low belt tension. In an alternative embodiment the two sensors are placed on the same side of the belt.

In some embodiments the sensors are placed on opposite sides of the belt.

This configuration of the sensor arrangement allows to observe the displacement of the belt from the conveying path in two opposite directions.

In some embodiments the motor control device is configured to change a set point of the motor control device by adding a predefined value to the set point, upon receiving a signal from one sensor for a predefined first time period.

The motor control device thereby facilitates the convergence towards a belt tension that is causing the conveying path of the belt to be close to the reference conveying path. In an alternative embodiment the sensor sends a signal after observing the deviation of the belt for a predefined first time period. This embodiment is used in a packet-based communication architecture.

In some embodiments the predefined first time period is in the range of 1 s to 60 s.

The first time period may allow the self-stacking belt to converge to a new conveying path after a set point change before another adjustment of the set point is done. Thereby slowing down the feedback loop and avoiding overshoot of the conveying path of the belt conveyor.

In some embodiments the set point is a torque set point.

The torque set point may be easier to implement as the torque of electric motors typically depend on the electric current running through the electric motor and measuring the electric current is well known in the art.

In some embodiments the predefined value is in the range of 0.001 Nm to 50 Nm or -0.001 Nm to -50 Nm.

The predefined value may be chosen such that the convergence of the conveying path of the belt towards the reference conveying path is fast, without overshooting. In an alternative embodiment the predefined value is dynamically changed by the motor control device in dependence of the signals received from the sensors.

In some embodiments the set point is a speed set point.

In another embodiment the set point is a speed set point, where the speed set point is controlling the rotational speed of the electric motor.

In some embodiments the sensors in the sensor arrangement are inductive sensors.

An advantage of this embodiment is that the inductive sensors are resilient in view of accumulated debris, dirt, water or ice, on the belt or the sensors themselves. Thereby the sensor signals are unaffected by the environmental operation conditions, thus allowing the belt conveyor to reliably operate in various environmental conditions. In an alternative embodiment the sensors may be any of the following: capacitive sensors, optical or infrared sensors. The optical and infrared sensors are configured to measure a reflection of a radiation source off the belt.

According to a second aspect of the invention, there is provided a method of controlling a belt tension of a belt conveyor. The belt conveyor comprising a self-stacking and at least partly curved belt. At least one electric motor is comprised by the belt conveyor, configured to tension the self-stacking belt. Furthermore, the belt conveyor comprises a motor control device, configured to control the at least one electric motor. Furthermore, the belt conveyor comprises at least one sensor arrangement, configured to communicate with the motor control device and the sensor arrangement is configured to sense a deviation of a conveying path of the self-stacking belt from a predefined reference conveying path of the self-stacking belt. The method comprising the steps of: receiving a signal indicative of the position of the belt from a sensor located in a section of the belt conveyor where the self-stacking belt is transitioning from a curvature with a first radius to a curvature with a second radius and determining based on the received signal if the conveying path of the self-stacking belt is deviating from the predefined reference conveying path. Furthermore, the method comprises the step of adjusting a set point of the motor control device in response to the previous step.

The method advantageously controls directly a position of the belt. The method thereby contributes to a safe and low-wear use of the conveyor belt. The method may be executed by a computer comprising a processing unit receiving instructions from a tangible data storage. The processor unit may be a microprocessor or a processor unit. The instructions on the data storage may be updated by personnel on site or from the processing unit.

In some embodiments the method further comprises the step of waiting for a predefined second time period before adjusting the set point of the motor control device again.

In this embodiment an overshoot of the indirectly controlled belt tension is advantageously avoided.

In some embodiments, the predefined second time period is in the range of 1 s to 60 s.

Further variations are conceivable, including that the motor control device is configured to change a set point of the motor control device by adding a predefined value to the set point, upon receiving a signal from one sensor for a predefined first time period.

The set point may be a torque set point. The set point may be a current that is applied to at least one port of the electric motor.

In some embodiments the predefined first time period is in the range of 1 s to 60 s.

The predefined first time period is chosen such that an over-and undershoot free control loop is created. The predefined first time period is in an embodiment between 1s and 10 s.

In some embodiments the set point is a torque set point.

In this embodiment the torque set point of the motor control device is referring to the torque that is used to affect the belt. In a further embodiment the change of the torque set point may involve a change of the rotational speed of the electric motor 3.

In some embodiments the predefined value is in the range of 0.001 Nm to 50 Nm or -0.001 Nm to -50 Nm.

The predefined value is chosen before operation depending on experience or the dimensions and specific weight of the belt. In an alternative embodiment the predefined value is dynamically changed by the motor control device in dependence of the signals received from the sensors.

In some embodiments the set point is a speed set point.

In this embodiment the change of the speed set point may involve a change of a torque of a drive shaft of the electric motor.

Presently preferred embodiments and further advantages will be apparent from the subsequent detailed description and drawings. A person skilled in the art will appreciate that any one or more of the above aspects of this disclosure and embodiments thereof may be combined with any one or more of the other aspects of the disclosure and embodiments.

### Brief Description of Drawings

In the following description embodiments of the invention will be described with reference to the drawings, in which
FIG. 1 is a perspective view of a belt conveyor in an embodiment of the invention.
FIG. 2 is a side view of the belt conveyor in the embodiment shown in FIG. 1.
FIG. 3 is a top view of the belt conveyor in the embodiment shown in FIG. 1.
FIG. 4 is a partial detailed top view of an embodiment of a belt conveyor.
FIG. 5 is a schematic top view of an embodiment of a belt conveyor.
FIG. 6 is a schematic flow chart of a method for control of a belt according to one embodiment of the invention.
FIG. 7 is a schematic structural diagram of an embodiment of a belt conveyor.
FIG. 8 is a schematic structural diagram of an embodiment of a belt conveyor.

### Detailed description

The present invention will now be described in more detail hereinafter with reference to the accompanying drawings, in which an embodiment of the invention is shown. This invention may, however, be embodied in many different forms and should not be construed as limited to the embodiments set forth herein; rather, these embodiments are provided for thoroughness and completeness.

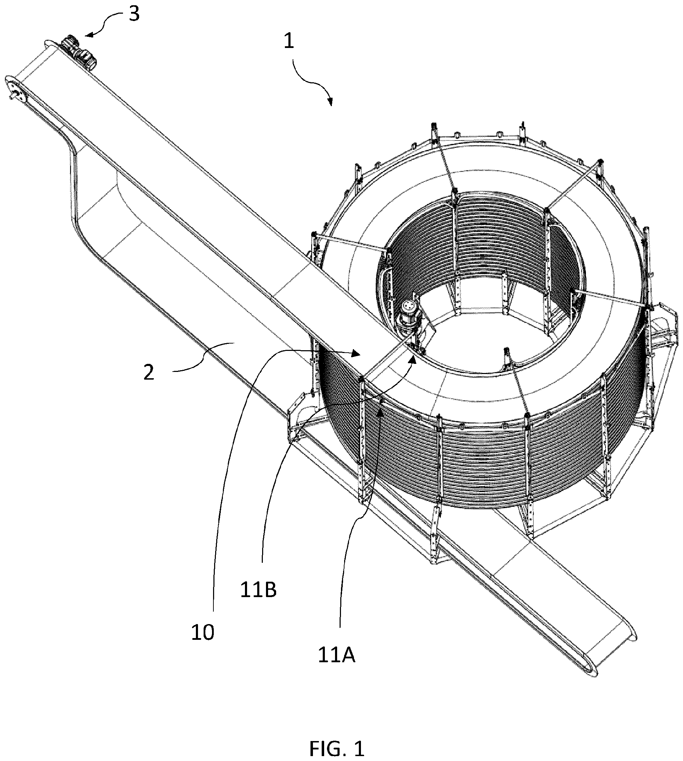

Referring first to the embodiments of FIGS. 1 to 4, there is a belt conveyor 1 for the transportation of goods, in particular food, the belt conveyor 1 comprising a self-stacking and at least partly curved belt 2 and at least one electric motor 3. The electric motor is configured to tension the self-stacking belt 2. In a manner known per se, the electric motor is tensioning the self-stacking belt 2 via a gear box that operates a pulley or sprocket that is pulling the self-stacking belt 2.

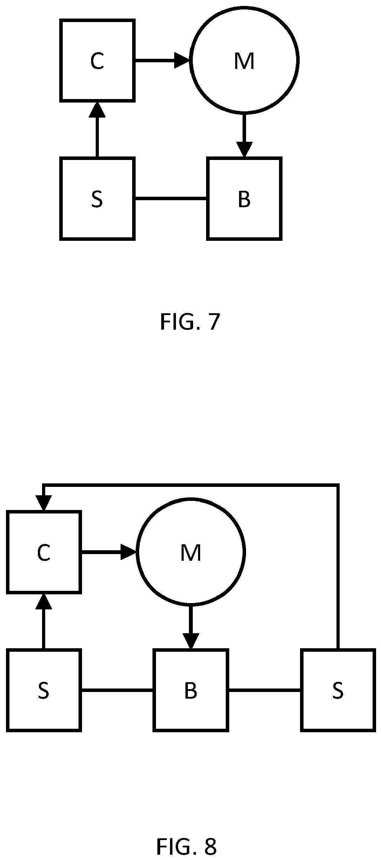

The belt conveyor 1 further comprises a motor control device C (indicated in the schematic structural diagrams of FIGS. 7 and 8), configured to control the electric motor 3. In the embodiment shown the self-stacking belt is comprising stacking walls configured to support a layer of belt on top of itself. The stacking walls are located at the outer rims of the conveyor belt. The stacking walls are configured to engage with the belt loop located on top. As the stacking walls are coupling a loop to the next higher loop, they are moving in parallel directions. As the belt approaches the end of the helix it is lifted off the lower loop of belt by a rail ramp. Consequently, the belt loop curves out of the helix and moves in a different direction than the former lower loop of belt.

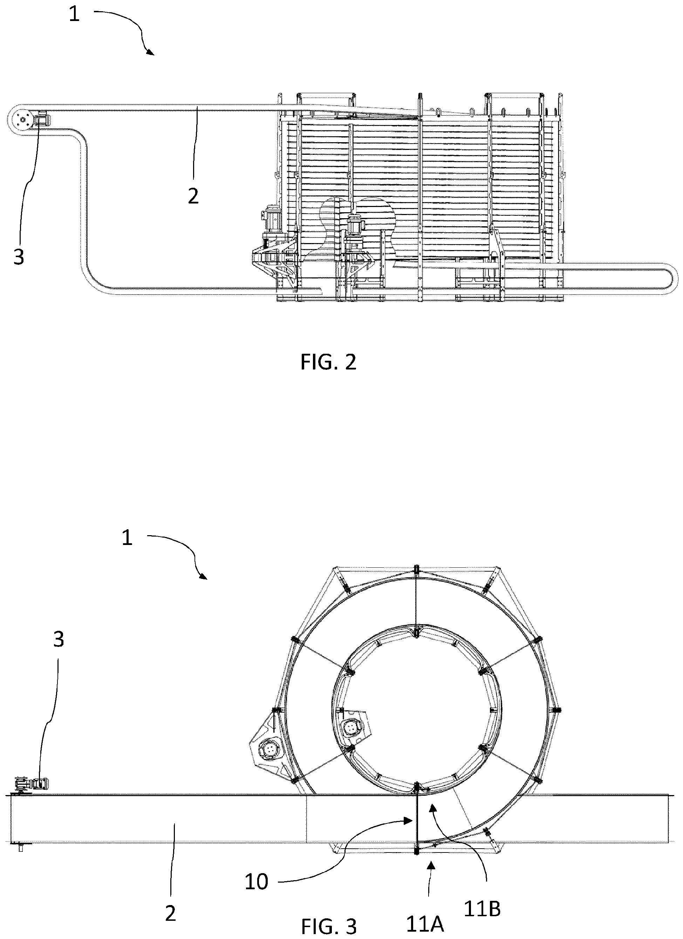

As shown in FIGS. 2 and 3, the self-stacking belt 2 is forming a helical part constituting the helix. The self-stacking belt 2 may be configured such that it partly forms a helix with preferably at least 5 overlapping loops. The helix may have a constant radius. The belt may transition out of the helix with another radius of curvature. The helix may be formed by the self-stacking belt, the self-stacking belt supporting layers of the helix that are further up. The lowest loop of the helix may be supported by a support structure. In another embodiment the self-stacking belt at least partly forms loops that are not necessarily helical. For example, the loops could, when projected onto the ground, form rectangles with rounded corners.

The belt conveyor comprises a sensor arrangement 10. The sensor arrangement 10 is configured to communicate with the motor control device C.

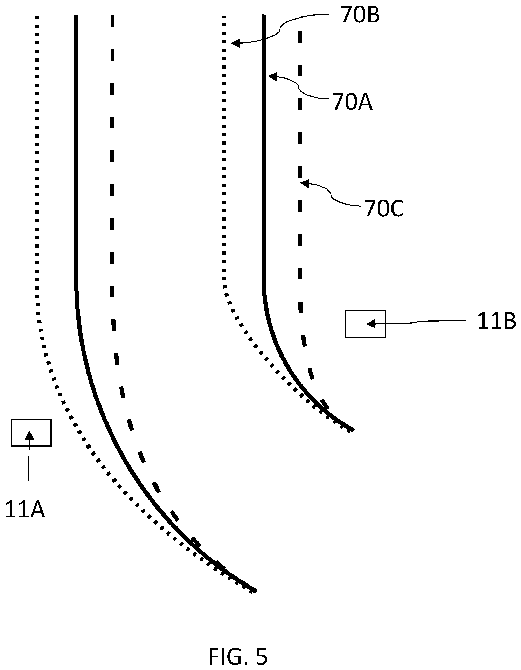

Referring now also to schematic top view of FIG. 5, the sensor arrangement 10 is configured to sense a deviation of a conveying path of the self-stacking belt 2 from a predefined reference conveying path 70A of the self-stacking belt 2.

The predefined reference conveying path 70A is defining the location of a part of the location of the belt in relation to the sensors 11A, 11B. A conveying path is a surface which is populated by conveyed goods when conveyed by the belt conveyor 1. The process of defining the reference conveying path 70A is done by personnel on site during the process of installing the conveyor belt 2.

In the embodiments shown, the sensors 11A, 11B are placed on the same horizontal height. The self-stacking belt 2 runs between the sensors 11A, 11B. The sensors 11A, 11B are positioned on the left and right side of the conveying path, respectively, and the threshold distance of the sensors is such that the reference conveying path 70A lies in the middle between the threshold conveying paths, as will be described in further detail below.

In the embodiment illustrated in FIG. 1, the self-stacking belt 2 forms a helix with 23 overlapping loops. The self-stacking belt 2 in the helix moves upwards, driven by two main drive motors (not indicated). The main drive motors are positioned in and outside of the helix. In this embodiment the electric motor 3 is used to controllably pick up the self-stacking belt 2 from the helix.

In the embodiment in FIG. 1, the belt conveyor 1 forms part of a freezer, the self-stacking belt 2 is configured to receive at a point food products intended for freezing at a specific temperature. In this embodiment the food received for freezing is dropped onto the self-stacking belt 2 before the helix. The belt conveyor 1 continuously ejects the food products in a frozen state. The food product is then further processed, for example in a packaging station. After a freezing operation the self-stacking belt 2 needs to be cleaned and sanitized at a temperature different from the freezing temperature. Therefore, as the friction coefficients of the surfaces experiencing friction, change, consequently the belt tension changes and needs to be adjusted. In that case the sensors would register a change in the conveying path of the self-stacking belt 2 and the motor control device would act based on that signal to reestablish an acceptable belt tension and thus belt conveying path.

In this embodiment the sensors are inductive sensors capable of sensing the presence of the self-stacking belt 2 in their proximity. The sensors immediately send a signal indicative of the self-stacking belt 2 being in their proximity, when the self-stacking belt 2 is in their respective proximity. The motor control device receives the signal from the sensors. If the signal indicative of the self-stacking belt 2 being in the proximity of a sensor is continuously received for longer than a predefined threshold time period, the motor control device will change the torque set point of the motor control loop. The change of the torque set point is chosen such that the torque set point is increased by a predefined value if the signal indicative of the self-stacking belt 2 being in their proximity of a sensor originates from sensor 11A, where sensor 11A is placed on the outside of the helix. If the signal indicative of the self-stacking belt 2 being in the proximity of a sensor originates from sensor 11B, the torque set point of the motor control device will be decreased by a predefined value. Sensor 11B is placed on the inside of the helix. The set point of the motor control device may be set out to control a physical attribute of the electric motor using control theory. In combination with the sensors the conveyor belt, comprises a closed-loop (feedback) based control loop. The sensors are used to deliver the feedback to the motor control device. Alternatively, the sensors may be any of the following: capacitive sensors, optical or infrared sensors. The optical and infrared sensors may be configured to measure a reflection of a radiation source off the belt.

Thus, the sensor arrangement 10 may be said to be configured to generate a first output signal when the distance of the self-stacking belt 2 to a sensor of the sensor arrangement 10 is smaller than a threshold value and a second output signal elsewise.

The threshold value may in principle be chosen to arbitrary values. Threshold values in the range of 10 mm have been found suitable.

It is conceivable to use only one sensor or more than the two sensors of the embodiments described in the above. The positioning of the sensor or sensors may also be chosen arbitrarily.

In the embodiment with inductive sensors, the sensors are configured to continuously measure the inductance of a spool and change the signal that is sent to the motor control device, if the inductance becomes bigger than a predefined value. As the belt comes closer to the sensor, the inductivity of the spool of the sensor is increased, due to the permeability of the belt being larger than that of air.

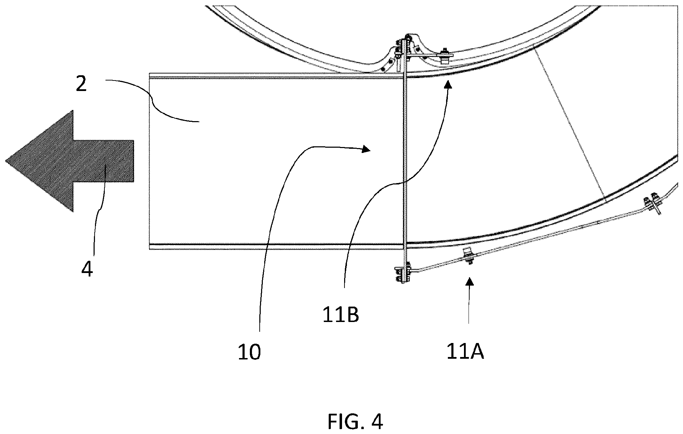

In FIG. 4, the part of the self-stacking belt 2 that is transitioning from a curvature with a first radius to a curvature with a second radius is shown. Furthermore, the sensor arrangement 10 of the belt conveyor can be seen with two sensors 11A, 11B.

FIG. 5 shows schematically a reference conveying path 70A and an inset conveying path 70C and an outset conveying path 70B. In the illustrated embodiment the sensors 11A, 11B of the sensor arrangement define the inset and outset conveying paths via their distance threshold. Meaning, that when the belt of the belt conveyor reaches one of these conveying paths 70B, 70C the sensors would switch from a first to a second signal. If the belt during operation reaches the conveying path 70B in response to a belt tension decrease, the sensor 11A would send a signal indicative of the belt being close to sensor 11A, to the motor control device. The motor control device would in a response to that increase the torque set point such that the belt tension is increased and the belt starts running on a path closer to the reference conveying path 70A. If the belt during operation reaches the conveying path 70C in response to a belt tension increase, the sensor 11B would send a signal indicative of the belt being close to sensor 11B, to the motor control device. The motor control device would then as a response reduce the torque set point which would lead the belt tension to decrease and cause the belt to operate closer to the predefined reference conveying path 70A.

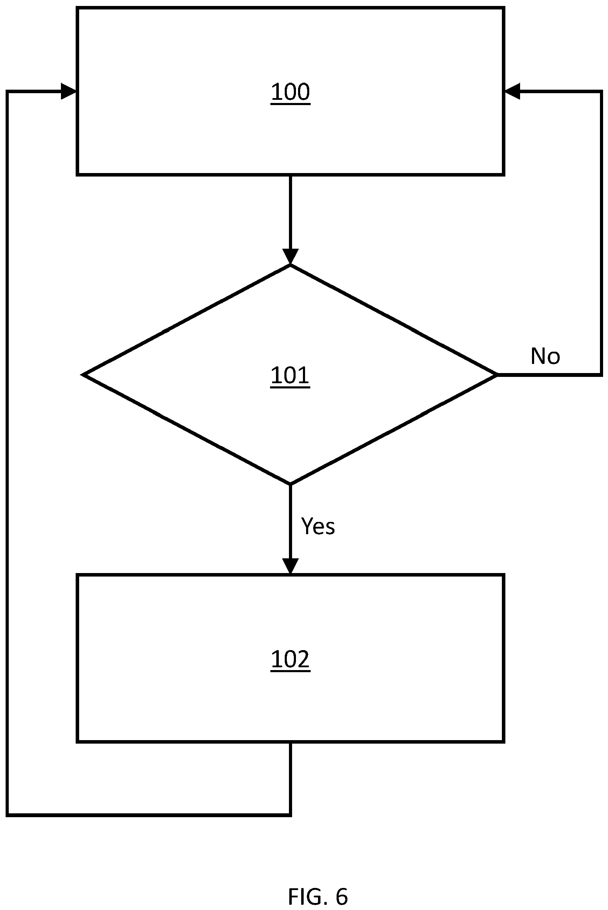

FIG. 6 shows schematically an embodiment of the claimed method. The method comprising the step 100 receiving a signal indicative of the position of the belt from a sensor located in a section of the belt conveyor where the self-stacking belt 2 is transitioning from a curvature with a first radius to a curvature with a second radius, and the step 101 determining based on the received signal if the conveying path of the self-stacking belt 2 is deviating from the predefined reference conveying path 70A. Furthermore, the method comprises the step 102 of adjusting a set point of the motor control device in response to the previous step 102. After the set point has been adjusted the method returns to the starting step 100.

FIG. 7 is a schematic structural diagram of a belt conveyor in accordance with the invention comprising a control device C, a motor M, a belt B and a sensor S. The motor M is acting on the belt B which is observed by the sensor S. The sensor S is sending signals to the control device C. These signals are read by the control device C and used to determine whether the position of the belt B and thus the belt tension of the belt B is in an acceptable range, or if the belt B is not in an acceptable position, adjust the operation of the motor M, in order to adjust the belt tension. In the embodiment shown the sensor arrangement comprises only one sensor.

FIG. 8 is a schematic structural diagram of a belt conveyor in accordance with the invention comprising a control device C, a motor M, a belt B and two sensors S. The motor M is acting on the belt B which is observed by the sensors S. The sensors S are sending signals to the control device C. These signals are read by the control device C and used to determine whether the position of the belt B and thus the belt tension of the belt B is in an acceptable range, or if the belt B is not in an acceptable position, adjust the operation of the motor M, in order to adjust the belt tension. In the embodiment shown the motor M and the belt B, make part of a physical system that is controlled by the control device C based on observations originating from the sensors S.

A further aspect of the invention relates to a belt conveyor and a method of controlling a belt of a belt conveyor. Everything disclosed in the description herein about the invention is applicable mutatis mutandis to the further aspect of the invention.

A1. A belt conveyor for the transportation of goods, the belt conveyor comprising,
an at least partly curved belt,
at least one electric motor, configured to tension the belt, characterized in that the belt conveyor further comprises,
a motor control device, configured to control the at least one electric motor,
at least one sensor arrangement, configured to communicate with the motor control device, and the sensor arrangement is configured to sense a deviation of a conveying path of the belt from a predefined reference conveying path of the belt.

A2. The belt conveyor of claim A1, wherein a set point of the motor control device is changed in response to a signal of the sensor arrangement.

A3. The belt conveyor of claim A1 or A2, wherein the at least one sensor arrangement is located in a section of the belt conveyor, wherein a part of the belt is transitioning from a curvature with a first radius to a curvature with a second radius.

A4. The belt conveyor of any previous claim, wherein the sensor arrangement is configured to generate a first output signal when the distance of the belt to a sensor of the sensor arrangement is smaller than a threshold value and a second output signal elsewise.

A5. The belt conveyor of any previous claim, wherein the sensor arrangement comprises at least two sensors.

A6. The belt conveyor of claim A5, wherein the sensors are placed on opposite sides of the belt.

A7. The belt conveyor of any previous claim, wherein the motor control device is configured to change a set point of the motor control device by adding a predefined value to the set point, upon receiving a signal from one sensor for a predefined first time period.

A8. The belt conveyor of claim A7, wherein the predefined first time period is in the range of 0.1 s to 60 s.

A9. The belt conveyor of claim A7 - A9, wherein the set point is a torque set point.

A10. The belt conveyor of claim 9, wherein the predefined value is in the range of 0.001 Nm to 50 Nm or -0.001 Nm to -50 Nm.

A11. The belt conveyor of claim A7 - A8, wherein the set point is a speed set point.

A12. The belt conveyor of any previous claim, wherein the sensors in the sensor arrangement are inductive sensors.

A13. A method of controlling a belt tension of a belt conveyor comprising a and at least partly curved belt, at least one electric motor, configured to tension the belt, a motor control device, configured to control the at least one electric motor, at least one sensor arrangement, configured to communicate with the motor control device, and the sensor arrangement is configured to sense a deviation of a conveying path of the belt from a predefined reference conveying path of the belt, the method comprising the steps of:
receiving a signal indicative of the position of the belt from a sensor located in a section of the belt conveyor where the belt is transitioning from a curvature with a first radius to a curvature with a second radius,
determining based on the received signal if the conveying path of the belt is deviating from the predefined reference conveying path,
adjusting a set point of the motor control device in response to the previous step.

A14. A method of controlling a belt tension according to claim A13, the method further comprising the step of,
waiting for a predefined second time period before adjusting the set point of the motor control device again.

A15.A method of controlling a belt conveyor according to claim A14, wherein the predefined second time period is in the range of 0.1 s to 60 s.

### List of reference numerals

- 1: belt conveyor
- 2: self-stacking belt
- 3: electric motor
- 4: direction of movement
- 10: sensor arrangement
- 11A: sensor
- 11B: sensor
- 70A: reference conveying path
- 70B: outset conveying path
- 70C: inset conveying path
- 100: method step
- 101: method step
- 102: method step
- M: electric motor
- C: motor controller
- S: sensor
- B: self-stacking belt

## Claims

1. A belt conveyor (1) for the transportation of goods, in particular food, the belt conveyor (1) comprising,
a self-stacking and at least partly curved belt (2),
at least one electric motor (3), configured to tension the self-stacking belt (2), **characterized in that** the belt conveyor (1) further comprises,
a motor control device, configured to control the at least one electric motor (3),
at least one sensor arrangement (10), configured to communicate with the motor control device, and the sensor arrangement (10) is configured to sense a deviation of a conveying path of the self-stacking belt (2) from a predefined reference conveying path of the self-stacking belt (2).

2. The belt conveyor of claim 1, wherein a set point of the motor control device is changed in response to a signal of the sensor arrangement (10).

3. The belt conveyor of claim 1 or 2, wherein the at least one sensor arrangement (10) is located in a section of the belt conveyor, wherein a part of the self-stacking belt (2) is transitioning from a curvature with a first radius to a curvature with a second radius.

4. The belt conveyor of any previous claim, wherein the sensor arrangement (10) is configured to generate a first output signal when the distance of the self-stacking belt (2) to a sensor of the sensor arrangement (10) is smaller than a threshold value and a second output signal elsewise.

5. The belt conveyor of any previous claim, wherein the sensor arrangement (10) comprises at least two sensors (11A, 11B).

6. The belt conveyor of claim 5, wherein the sensors (11A, 11B) are placed on opposite sides of the belt (2).

7. The belt conveyor of any previous claim, wherein the motor control device is configured to change a set point of the motor control device by adding a predefined value to the set point, upon receiving a signal from one sensor for a predefined first time period.

8. The belt conveyor of claim 7, wherein the predefined first time period is in the range of 0.1 s to 60 s.

9. The belt conveyor of claim 7-9, wherein the set point is a torque set point.

10. The belt conveyor of claim 9, wherein the predefined value is in the range of 0.001 Nm to 50 Nm or -0.001 Nm to -50 Nm.

11. The belt conveyor of claim 7-8, wherein the set point is a speed set point.

12. The belt conveyor of any previous claim, wherein the sensors (11A, 11B) in the sensor arrangement (10) are inductive sensors.

13. A method of controlling a belt tension of a belt conveyor (1) comprising a self-stacking and at least partly curved belt (2), at least one electric motor (3), configured to tension the self-stacking belt (2), a motor control device, configured to control the at least one electric motor (3), at least one sensor arrangement (10), configured to communicate with the motor control device, and the sensor arrangement (10) is configured to sense a deviation of a conveying path of the self-stacking belt (2) from a predefined reference conveying path of the self-stacking belt (2), the method comprising the steps of:
receiving a signal indicative of the position of the belt (2) from a sensor located in a section of the belt conveyor (1) where the self-stacking belt (2) is transitioning from a curvature with a first radius to a curvature with a second radius,
determining based on the received signal if the conveying path of the self-stacking belt (2) is deviating from the predefined reference conveying path,
adjusting a set point of the motor control device in response to the previous step.

14. A method of controlling a belt tension according to claim 13, the method further comprising the step of,
waiting for a predefined second time period before adjusting the set point of the motor control device again.

15. A method of controlling a belt conveyor according to claim 14, wherein the predefined second time period is in the range of 0.1 s to 60 s.
